# EUROPEAN PATENT APPLICATION

(11) **EP 2 213 538 A1**
(43) Date of publication of application: **04.08.2010**
(21) Application number: 09425021.4
(22) Date of filing: 28.01.2009
(51) Int. Cl.: B60T 13/74, B64C 25/44, B60T 1/10

(54) **Braking system for the undercarriage of an aircraft**

(71) Applicant: Alenia Aeronautica S.p.A., 80038 Pomigliano D'Arco (Napoli) (IT)
(72) Inventor: Anastasio, Vincenzo, 80038 Pomigliano d'Arco (IT)
(74) Representative: Bongiovanni, Simone

(57) **Abstract**

A braking system for an aircraft (2) provided with undercarriage (7), wherein an axial-flux three-phase reversible electric machine (20) is set between the wheel (10) and frame (8) of the undercarriage; a three-phase rectifier diode bridge (28) is provided, connected at input to the windings (26a, 26b, 26c) of the axial-flux reversible electric machine (20) during rotation of said wheel (10) when the aircraft is landing, to provide a substantially levelled voltage (Vc) used for solenoids (54) for actuating a mechanical disk brake coupled to the wheel (10) and used for producing a braking effect in said landing phase.

## Description

The present invention relates to a braking system for the undercarriage of an aircraft.

As is known, during the operations of landing of an aircraft, the latter must be braked in order to reduce its speed and so that it comes to a halt in safe conditions within the length of the landing strip. Braking of the aircraft occurs by means of the action of brakes of an aerodynamic type and by means of the action of mechanical brakes coupled to the undercarriage of the aircraft.

Currently, undercarriages of aircraft are provided with mechanical disk brakes which are operated by pressurized oil coming from a hydraulic circuit; in particular, the braking action is modulated manually by the pilot by acting on a brake pedal that acts on valves of the hydraulic circuit.

The aim of the present invention is to provide a braking system for the undercarriage of an aircraft that will use part of the kinetic energy of the aircraft in landing for generating the braking action.

The above aim is achieved by the present invention in so far as this regards a braking system for an aircraft provided with undercarriage in which an axial-flux reversible electric machine is set between the wheel and the frame of the undercarriage, voltage-rectifier means being provided, which can be connected at input to the windings of said axial-flux reversible electric machine, during rotation of said wheel when the aircraft is landing, to provide a substantially levelled voltage used for operating actuator means of a mechanical brake coupled to said wheel used for producing a braking effect in said landing phase.

The invention will now be illustrated with particular reference to the attached drawings, which illustrate a preferred non-limiting example of embodiment thereof and in which:
Figure 1 is a schematic illustration of an aircraft that uses the system of the present invention; and
Figure 2 is a simplified electrical diagram of the system according to the present invention.

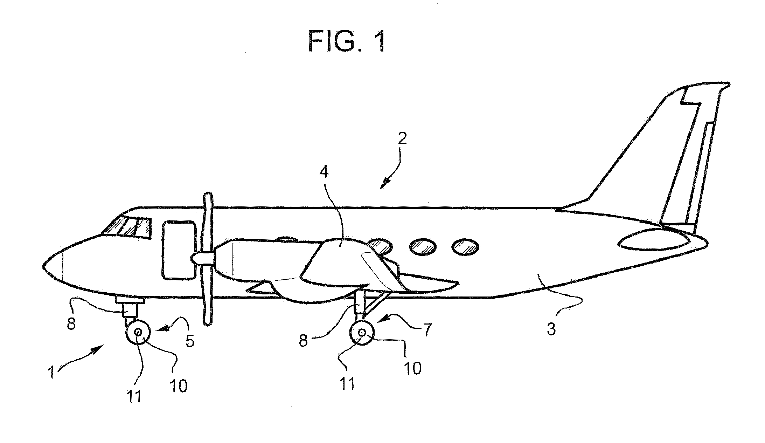

In Figure 1 designated as a whole by 1 is a braking system for an aircraft 2 (represented schematically) comprising a fuselage 3, two side wings 4, a front undercarriage 5 carried by the fuselage 3, and two lateral undercarriages 7, which are each carried by a corresponding wing 4.

Each of the undercarriages 5, 7 comprises a respective frame 8, a top terminal portion of which is coupled to a corresponding load-bearing structure (not illustrated) of the aircraft 2, and an opposite bottom terminal portion of which carries hinged thereto, in the particular example described, one or more pairs of idle wheels 10 hinged to the frame 8 so as to turn about a corresponding hinge axis 11.

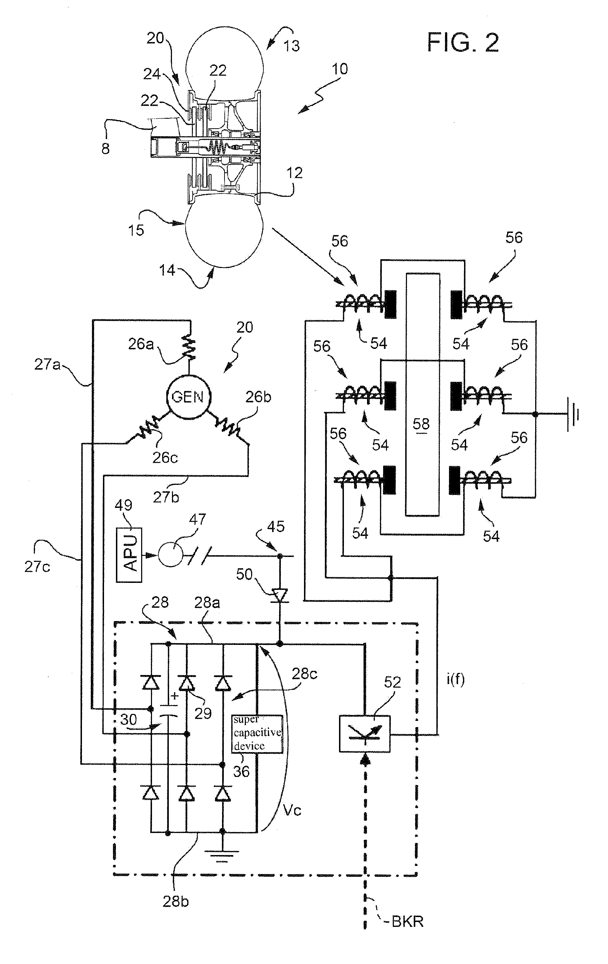

Each wheel 10 (Figure 2) comprises a disk 12 and a tyre 13, which, in turn, comprises a tread 14 and two lateral sides 15.

In the particular example described, the undercarriages 5 and 7 are of a retractable type and for this reason are associated to respective movement assemblies, in themselves known and not described in detail, which are each designed to displace the corresponding undercarriage 5, 7 between a retracted resting position, in which the undercarriages 5, 7 are completely housed in a seat of the fuselage 3 and of the wings 4, respectively, and an operative extracted position, in which the undercarriages 5, 7 extend downwards from the fuselage 3 and from the wings 4.

According to the preferred example of the present invention (Figure 2), an axial-flux reversible electric machine 20 (of a known type) is set between the wheel 10 and the frame 8 in such a way that the stator 22 is angularly fixed with respect to the frame 8 and the rotor 24 is angularly fixed with respect to the wheel 10.

In the example of embodiment illustrated, the axial-flux electric machine 20 comprises at least one stator 22, which is fixed with respect to the frame 8, and at least one rotor 24, which is angularly fixed with respect to the wheel 10. The rotor 24, made according to known technologies, comprises a disk made of non-magnetic metal material, arranged on which are a plurality of permanent magnets M set at angular distances apart from one another. Typically, the permanent magnets, of a plane type, have in plan view a trapezial shape.

The stator 22 comprises a toroidal core made of ferromagnetic material (not illustrated), in which a plurality of slots are made, said slots housing insulated electrical conductors wound around the toroidal core to provide a first winding 26a, a second winding 26b, and a third winding 26c, which have first terminals connected to one another and second terminals connected, respectively, to a first electrical line 27a, a second electrical line 27b, and a third electrical line 27c.

Each electrical line 27a, 27b, 27c communicates with the input of a three-phase rectifier bridge 28, which has an output 28u (defined by a first, positive, electrical line 28a and a second, negative, electrical line 28b) on which a levelled DC voltage Vc is present. The three-phase rectifier bridge 28, represented schematically, comprises a plurality of diodes 29 and a plurality of levelling capacitors 30 set between the electrical lines 28a, 28b.

The output 28u of the rectifier bridge 28 is connected in parallel to a supercapacitive device 36 (of a known type) in which electrical charge can be accumulated.

Also present on the aircraft 2 is an on-board electrical network 45 supplied by current generators 47 (APU - auxiliary power unit) actuated by one of the engines and/or by an auxiliary turbine 49.

The on-board electrical network 45 is connected to the output 28u through a three-phase rectifier device (represented schematically with a diode 50), which enables a unidirectional flow of current from the on-board electrical network 45 to the line 28a.

The voltage Vc present between the lines 28a, 28b is supplied to an input of a current-modulator device 52 (of a known type) which supplies a plurality of solenoids 54, which move respective mobile callipers 56 away from and towards a brake disk 58, which is fixed with respect to the wheel 10.

The intensity of the current i(f) supplied to the solenoids 54, and consequently the intensity of the braking action exerted by the disk brake 58, is regulated on the basis of a command signal BRK produced by a brake pedal (not illustrated) actuated by the pilot.

According to a variant (not illustrated), the rectifier bridge might not be present, and the (three-phase AC) current generated by the electric machine 20 could be directly supplied to the solenoids 54 through a current-modulator device 52 designed to control an AC current.

In use, when the aircraft 2 is landing, following upon contact between the lateral undercarriages 7 and the runway, the wheels 10 are set in fast rotation drawing along with them the rotor 24, which moves at a high angular velocity with respect to the stator 22, which is fixed with respect to the frame 8. In this way, electromotive forces are induced on the windings 26a, 26b, 26c in so far as the axial-flux electric machine 20 behaves as a current generator.

The current generated is supplied, through the electrical lines 27a, 27b, 27c, to the three-phase rectifier bridge 28 and concurs in creation of the DC voltage Vc.

Said DC voltage Vc is in turn supplied to the input of the current generator 52 where the voltage Vc generated by the axial-flux generator 20 is used for electrical actuation of the disk brake and for obtaining braking of the aircraft. In other words, the kinetic energy of the aircraft 2 during landing is transformed by the axial-flux electric machine 20 into electrical energy (current i(f)) used for actuation of the disk brake 58. The pilot can modulate the braking action by acting on the brake pedal (signal BRK).

The currents induced supplied by the generator 20 determine, in turn, a magnetic field antagonistic to the one produced by the rotor 24 causing a further braking effect by induction.

The braking effect by induction is directly proportional to the current supplied by the generator 20 and remains as long as the generator 20 continues to supply current to the solenoids 54.

The amount of electric power not used for braking is accumulated, within the device 36, in an accumulation system of a supercapacitive type.

When the wheel 10 starts to decelerate and its velocity becomes critical, in such a way as not to enable the generator 20 to supply the solenoids 54 with a current adequate for maintaining the pressure required by the braking action imposed by the pilot, charge is drained by the device 36, which restores the charge previously stored therein. The required braking action is thus guaranteed.

When also the charge present in the device 36 is exhausted, whether totally or partially, and the voltage generated by the electric machine 20 drops below a critical threshold, the electrical energy necessary for maintaining the braking action, imposed by the pilot through the pressure exerted on the brake pedal, can be drawn from the on-board electrical network 45 through the diode 50.

The current necessary for withstanding the braking action required on the disk is thus drawn directly from the electrical network 45 of the aircraft.

From this point on, given that the portion of braking by induction has ceased, it is the electromechanical action of the disk brake 58 alone that acts on the wheel 10.

Hence, in this way, the final arrest of the aircraft 2 can be made in a totally "electrical" way without using hydraulic or pneumatic power to enable final arrest of the aircraft.

The aircraft 2 can be provided with a parking brake with mechanical blocking (by means of a pawl-and-ratchet mechanism of a known type, not illustrated), which is electrically activated and de-activated.

In the braking system described above, in which the reversible electric machines are of a three-phase type, there exists a direct proportionality between the antagonistic braking torque and the radius r of the wheel 10 (arm of the torque) that is of a cubic type, i.e., *C=f*(*r*³) However, since the radius of the wheel 10 is a fixed amount and the quantities involved are sufficiently high, an increase in the braking torque by the inductive effect can be obtained using an electric machine 20 of a "hexaphase" type (not illustrated).

On this hypothesis, the increase in the number of phases (corresponding to a decrease in the polar pitch of the machine) determines an increase in the induced counter-electromotive force (i.e., in the resistant torque acting on the wheel 10) given the same size and velocity of rotation of the rotor 24 (and hence given the same intensity of the current induced on each phase).

There is thus obtained a braking system actuated in a completely electrical way in so far as the solenoids 54 are supplied directly by the axial-flux generator 20 mounted on the axle of the wheel 10. As highlighted above, the energy produced by rotation of the wheel 10 is used for actuating the braking action.

The braking action is rendered autonomous by the electrical network of the aircraft 2.

In addition, given the reversibility of the axial-flux machine, it is possible, through an appropriate supply system (inverter with variable and controllable output voltage and frequency), to drive the aforesaid machine so as to enable operation thereof as motor and hence moving the aircraft on the ground. For this function the electrical energy necessary for moving would be drawn from the on-board electrical network supplied by the generator connected to the APU.

## Claims

1. A braking system for an aircraft (2) provided with an undercarriage (7), wherein an axial-flux reversible electric machine (20) is set between the wheel (10) and the frame (8) of the undercarriage and is set in rotation during landing following upon contact of the wheel with the runway;
said reversible electric machine providing a voltage used for operating actuator means (54) of a mechanical brake coupled to the wheel (10) and used for producing a braking effect in said landing phase.

2. The system according to Claim 1, wherein voltage-rectifier means (28) are provided, which can be connected at input to the windings (26a, 26b, 26c) of said axial-flux reversible electric machine (20), during rotation of said wheel (10) when the aircraft is landing, to provide a substantially levelled voltage (Vc) used for actuating said actuator means.

3. The system according to Claim 1 or Claim 2, wherein the stator (22) of the axial-flux reversible electric machine (20) is fixed with respect to the frame (8), and the rotor (24) of the axial-flux reversible electric machine (20) is angularly fixed with respect to the wheel (10).

4. The system according to any one of the preceding claims, wherein an accumulation device (36) is provided, in which electric charge can be accumulated and which can be connected (34a, 34b, 34c) to said axial-flux reversible electric machine (20) to store an amount of charge not used to obtain said braking effect.

5. The system according to any one of the preceding claims, wherein current-modulator means (52) are provided, connected at input to the output of said voltage-rectifier means (28) and designed to supply at least one actuator (54) that actuates a mobile part (58) of said mechanical brake.

6. The system according to Claim 5, wherein said current-modulator means (52) are configured for regulating the intensity of the current supplied to said actuator (54), and consequently the intensity of the braking action exerted by the mechanical brake, on the basis of a command signal (BRK) produced by a brake pedal actuated by the pilot.

7. The system according to any one of the preceding claims, wherein said mechanical brakes are of the disk type.

8. The system according to any one of the preceding claims, wherein the axial-flux electric machine (20) is of a three-phase type and comprises a first winding (26a), a second winding (26b), and a third winding (26c), which have first terminals connected to one another and second terminals connected to the input of said voltage rectifier (28).

9. The system according to Claim 2, wherein said voltage rectifier (28) comprises a diode bridge (29).
